Europäisches Patentamt

European Patent Office

Office européen des brevets

(11) Publication number: **0 297 574**
**A2**

## (12) EUROPEAN PATENT APPLICATION

(21) Application number: 88110469.9

(51) Int. Cl.⁴: **H01L 41/08**

(22) Date of filing: 30.06.88

(30) Priority: 01.07.87 JP 162368/87
09.07.87 JP 171380/87

(43) Date of publication of application:
04.01.89 Bulletin 89/01

(84) Designated Contracting States:
DE FR GB

(71) Applicant: HITACHI, LTD.
6, Kanda Surugadai 4-chome Chiyoda-ku
Tokyo(JP)

(72) Inventor: Mori, Kenji
7-46, Nakakandatsumachi
Tsuchiura-shi(JP)
Inventor: Hirai, Hiromu
15-16, Higashi-2-chome
Tsukuba-shi(JP)
Inventor: Kobayashi, Isao
Niihariryo 3602, Shimoinayoshi Chiyodamura
Niihari-gun Ibaraki-ken(JP)

(74) Representative: Patentanwälte Beetz sen. -
Beetz jun. Timpe - Siegfried -
Schmitt-Fumian
Steinsdorfstrasse 10
D-8000 München 22(DE)

(54) **Actuator which drives a driven member by using piezo-electric elements.**

(57) A piezo-electric drive unit (1) is disposed in contact with a driven member (4), with an a.c. voltage and a d.c. voltage superimposed thereon being applied to the drive unit (1). The pushing force acting between the drive unit (1) and driven member (4) is controlled by adjusting the d.c. voltage.

FIG. I

# ACTUATOR WHICH DRIVES A DRIVEN MEMBER BY USING PIEZO-ELECTRIC ELEMENTS

## BACKGROUND OF THE INVENTION

This invention relates to an actuator which drives a driven member by using piezo-electric elements.

A piezo-electric motor is a device in which an alternating voltage is applied to a piezo-electric element or electrostrictive element (both will be termed generically "piezo-electric element" hereinafter) and the created vibration exerts frictional drive on a driven member in contact with the motor. The device has been attracting attention recently for its use of the high energy density of the piezo-electric element.

The device is classified into two major categories based on the principle: the vibratory piece type and progressive wave type. Among the former vibratory piece type, there is disclosed a piezo-electric drive unit comprising a pair of laminated piezo-electric elements as a fundamental component of the motor, featuring bidirectional drive and high output, in Japanese Patent Unexamined Publications Nos. 60-200776 and 61-168025, filed by the same applicant of the present invention, that are equivalent to U.S. Patent No. 4,613,782.

The actuator of the above-mentioned patents operates in such a manner that high-frequency (mechanical resonant frequency) voltages with a proper phase difference are applied to piezo-electric elements, which vibrate a drive end in an ellipsoidal locus, rendering a frictional drive to a driven member in one direction. Reversing the phase relation of the application voltages results in an opposite driving direction.

An experiment was conducted to confirm the driving performance of the piezo-electric motor based on the above-mentioned technique, which revealed the following. The created driving force Fd increases in proportion to the pushing force Fh exerted between the driver and driven member, however, as the pushing force Fh further increases, the driving force Fd diminishes.

Conventional piezo-electric motors use spring mechanisms as a means of push force application, and there exists inherently a constant pushing force regardless of the presence or absence of the voltage application.

## SUMMARY OF THE INVENTION

An object of this invention is to provide an actuator in which the pushing force acting between the driver and driven member can be adjusted easily.

Another object of this invention is to provide an actuator in which the pushing force acting between the driver and driven member can be adjusted arbitrarily in an electrical manner.

A further object of this invention is to provide an actuator which operate efficiently by making its full exertion of driving performance.

The present invention resides in an actuator for driving a driven member which is in contact with the tip of a piezo-electric drive unit, with an a.c. voltage being applied to the unit, wherein a variable d.c. bias voltage is further applied to the unit so that the pushing force acting between the piezo-electric drive unit and driven member can be adjusted.

Namely, the inventive actuator features the inclusion of a piezo-electric drive unit disposed in contact with a driven member, and a driving power source which provides an a.c. voltage for producing a cyclic locus in the operation of the drive unit and a d.c. voltage for adjusting the pushing force acting between the drive unit and driven member.

Other objects and features of this invention will become more apparent from the following description taken in conjunction with the accompanying drawings.

## BRIEF DESCRIPTION OF THE DRAWINGS

Fig. 1 is a block diagram showing an embodiment of this invention;

Fig. 2 is a diagram explaining the driving action of the piezo-electric drive unit in Fig. 1;

Fig. 3 is a waveform diagram showing an example of the voltage applied to the piezo-electric drive unit;

Figs. 4A and 4B are diagrams showing other embodiment of this invention, Fig. 4A being a plan view, Fig. 4B being a front view;

Fig. 5A is a graph showing the driving force vs. pushing force characteristics;

Fig. 5B is a graph showing the driving speed vs. pushing force characteristics;

Figs. 6A and 6B are diagrams showing other embodiment of this invention, Fig. 6A being a plan view, Fig. 6B being a front view;

Figs. 7A and 7B are diagrams showing other embodiment of this invention, Fig. 7A being a plan view, Fig. 7B being a front view;

Figs. 8A and 8B are diagrams showing other embodiment of this invention, Fig. 8A being a plan view, Fig. 8B being a front view;

Figs. 9A and 9B are diagrams showing other embodiment of this invention, Fig. 9A being a plan view, Fig. 9B being a front view;

Fig. 10 is a diagram showing other embodiment of this invention;

Fig. 11 is a diagram showing other embodiment of this invention;

Fig. 12 is a diagram showing other embodiment of this invention;

Fig. 13 is a diagram showing other embodiment of this invention; and

Fig. 14 is a diagram used to explain the operation of the embodiment of Fig. 13.


DESCRIPTION OF THE PREFERRED EMBODIMENTS

Specific embodiments of this invention will be described in detail with reference to the drawings.

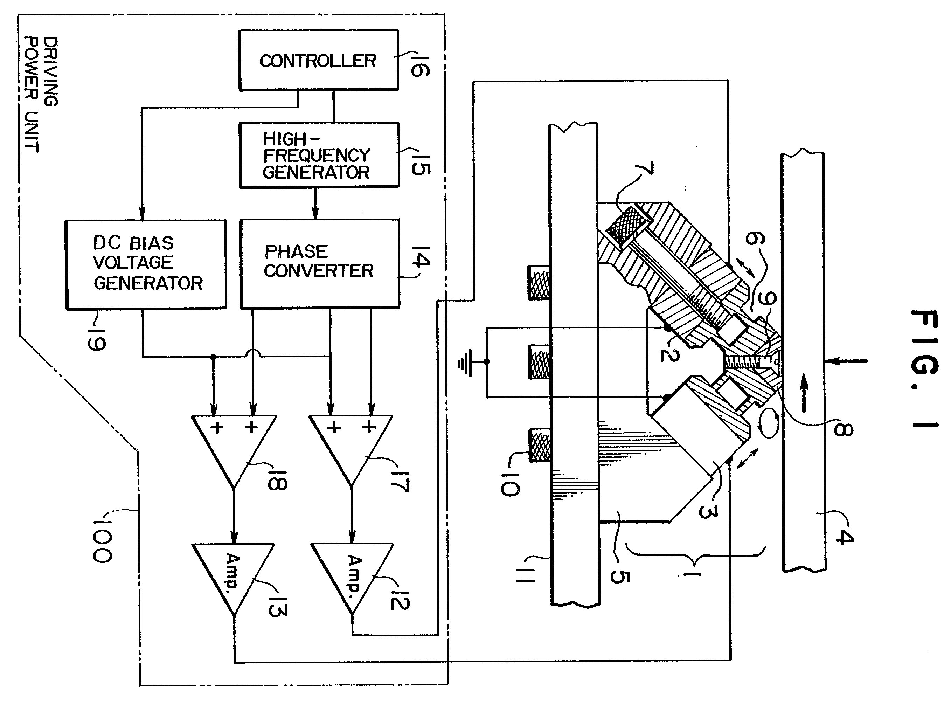

Fig. 1 is a block diagram showing an embodiment of this invention. Shown by 1 is a piezo-electric drive unit, which is identical to that disclosed in U.S. Patent 4,613,782, and it is fixed on a mount 5 so that a pair of laminated piezo-electric elements 2 and 3 have their displacement directions crisscrossing askew on the drive surface of a driven member 4 as shown by the arrows. Displacements of the piezo-electric elements 2 and 3 are merged by a displacement merging device 6, which is a resilient hinge or an intersecting pair of parallel links made of flat springs as shown in the figure. The parallel links have their ends fixed to the piezo-electric elements 2 and 3 and to the mount 5 by bonding or by means of bolts 7 or the like as shown. Fitted on the tip of the displacement merging device 6 is a contact driver (drive end) 8 made of a wear-resistive material, which is fixed by means of a screw 9 or the like so that it can be replaced. The mount 5 is fixed on a base 11 by means of bolts 10 or the like. The driven member 4 is pressed to the piezo-electric drive unit 1.

Indicated by 12 and 13 are power amplifiers which supply power to the piezo-electric elements 2 and 3, 14 is a phase converter, 15 is a high-frequency generator, 16 is a controller, 17 and 18 are adders, and 19 is a d.c. bias voltage generator.

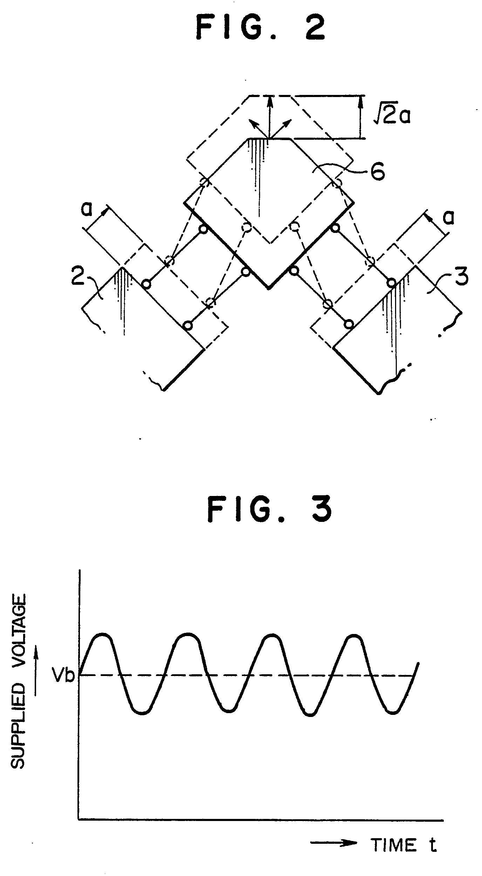

The operation of this embodiment will be explained using Fig. 1 and Fig. 2 which depics as a model the displacement merging device and drive end of the piezo-electric drive unit. It is assumed that the assembly is made such that the driven member 4 supported by a bearing (not shown) is virtually in contact with the drive end 8 with no pushing force when no voltage is applied to the piezo-electric elements (power-off state). In this initial state of zero pushing force, the driven member is free from constraint and allowed to have a free movement.

In operation, a proper d.c. bias voltage is applied in a polarity condition which allows the piezo-electric elements 2 and 3 to expand. The elements have a displacement of $a$ as shown in Fig. 2. The parallel links transmit small displacements to the tip without interference with each other, and consequently the drive end 8 comes close to the driven member in its normal direction by a distance of $\sqrt{2}a$. With the drive unit inclusive of the base 11 and the driven member having a mechanical regidity of K between them, the pushing force Fh is expressed by the following equation.

$$Fh = K \bullet \sqrt{2}a$$

Since the amount of displacement $a$ is proportional to the d.c. bias voltage Vb applied to the piezo-electric element, the pushing force Fh can be adjusted arbitrarily using the voltage Vb.

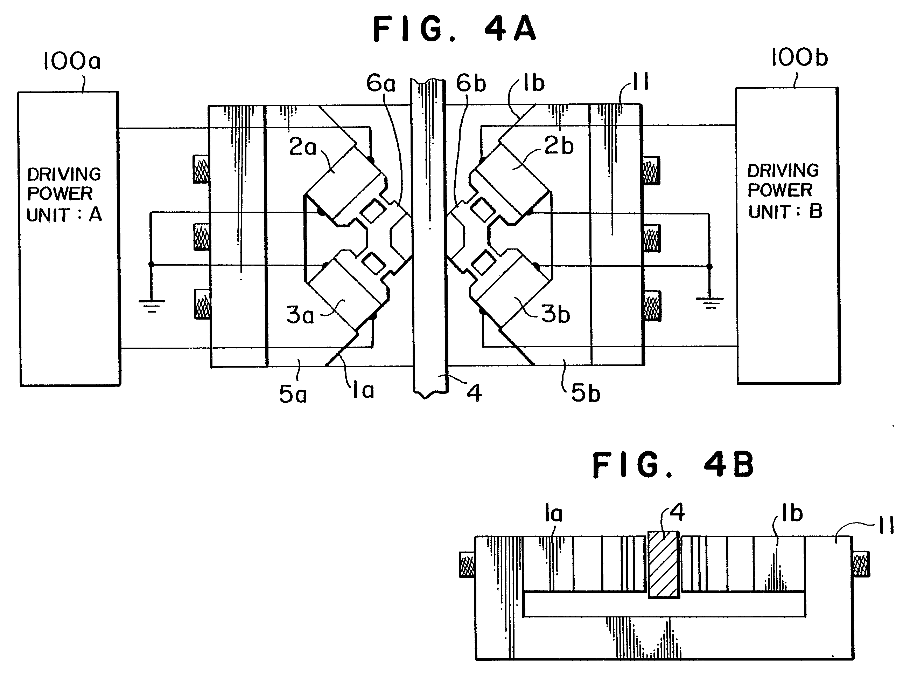

For driving the driven member 4, a resonant high-frequency voltage from the oscillator 15 is transformed with a phase converter 14 into voltages with a phase difference of $+90°$ (forward) or $-90°$ (reverse) and, after being superimposed on the d.c. bias voltage by the adders 11 and 12, applied to the piezo-electric elements 2 and 3, while the pushing force is retained by the d.c. bias voltage application as described above. Accordingly, the voltages applied to the piezo-electric elements are as shown in Fig. 3. The drive end 8 vibrates on a circular locus or ellipsoidal locus (generically a cyclic locus), and exerts a frictional drive in one direction on the driven member 4 in contact with it.

In case of a variable load, the d.c. bias voltage is varied to adjust the pushing force during the operation, and a correct driving force can be maintained. Some wear of the drive end 8 can be offset by pushing out the drive end 8 by additional application of the d.c. bias voltage.

The phase converter 14 may be replaced with a signal switching circuit which switches the delivery of a high-frequency voltage signal to the piezo-electric element 2 or 3 depending on the forward or reverse drive mode as intended, although the driving efficiency is lower than the case of using the phase converter.

Although in the foregoing embodiment the drive unit is initially positioned so that no pushing force exists at a zero application voltage, if the driven member is not required to have the free-run function, the assembly may be made in a position providing a certain pushing force, which is then varied by the d.c. bias voltage.

Although in the embodiment of Fig. 1 the piezo-electric drive unit 1 is placed on only one side of the driven member 4, if two units are disposed head-on on both sides of the driven member 4, the pushing force is not imposed on the bearing and a pushing force with enhanced rigidity can be applied. Figs. 4A and 4B show in plan view and front view an embodiment of this arrangement. Indicated by 1a and 1b are the same piezo-electric drive unit as described above, and they are located head-on on both sides of the driven member 4. The bearing of the driven member 4 is not shown in the figure. Both units are fixed inside a rigid C-shape frame 11, with their spacing being adjusted as specified by means of a shim or the like. For example, if the free-run function is needed in the power-off state, the spacing is set so that the pushing forces are virtually nullified. This embodiment having two piezo-electric drive units confronting each other on a rigid frame realizes a compact piezo-electric motor whose pushing force is variable through the voltage adjustment.

Although the illustrated embodiment of Fig. 1 has its piezo-electric drive unit formed by askew-crisscrossed piezo-electric elements, it is also possible for a piezo-electric drive unit comprising a pair of piezo-electric elements in parallel arrangement, as disclosed in Japanese Patent Unexamined Publication No. 61-168025, to have its pushing force adjusted by a d.c. bias voltage in the same manner as described above.

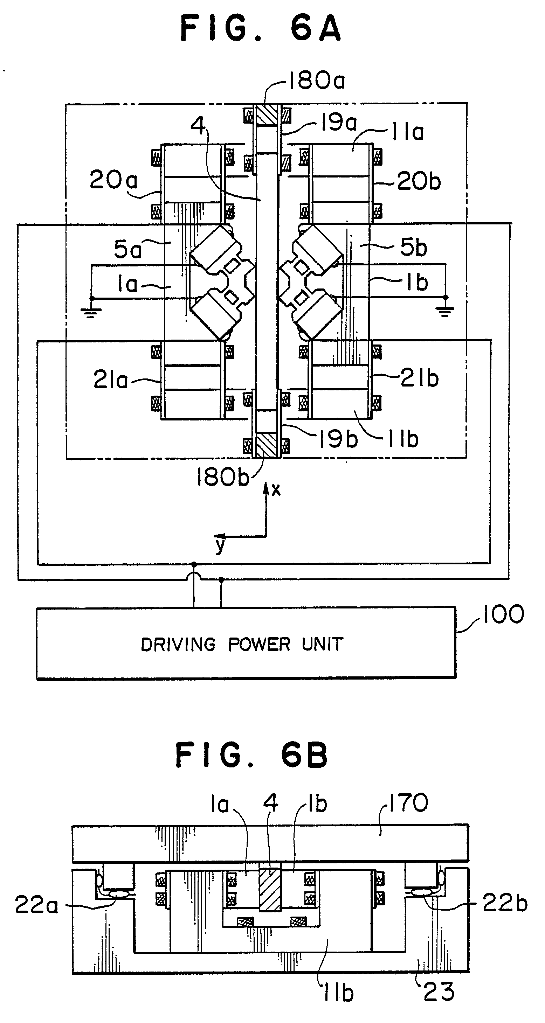

Next, a different embodiment of this invention will be described with reference to Figs. 6A and 6B. In the figures, portions identical to those of Fig. 1 are referred to by the common symbols. The embodiment illustrates the application of this invention to the drive mechanism of a high-precision positioning XY table (only one axis is shown) used in a semiconductor device fabricating system. The drive mechanism is smartly accommodated under the table. In the figures, indicated by 170 is a table, 180a and 180b are blocks fixed on the table 170, and 19a and 19b are flat springs for connecting a bar-shape driven member 4 to the boocks 180a and 180b by means of bolts as shown for example. Disposed on both sides of the driven member 4 are piezo-electric drive units described above, and the units are fixed on bases 11a and 11b by flat springs 20a and 21a, and 20b and 21b, respectively, so that the units are pressed to the driven member 4 by the spring force. The table 170 is guided at its bottom to slide straight along the chassis 23 by means of bearings, e.g., roller guide bearings, 22a and 22b. The table 170 and chassis 23 are not shown in Fig. 6A, except for their profile indicated by the dash and double-dot line. The driving power unit 100 is the same as shown in Fig. 1, and it supplies the power voltage as shown in Fig. 3 to the piezo-electric drive units 1a and 1b.

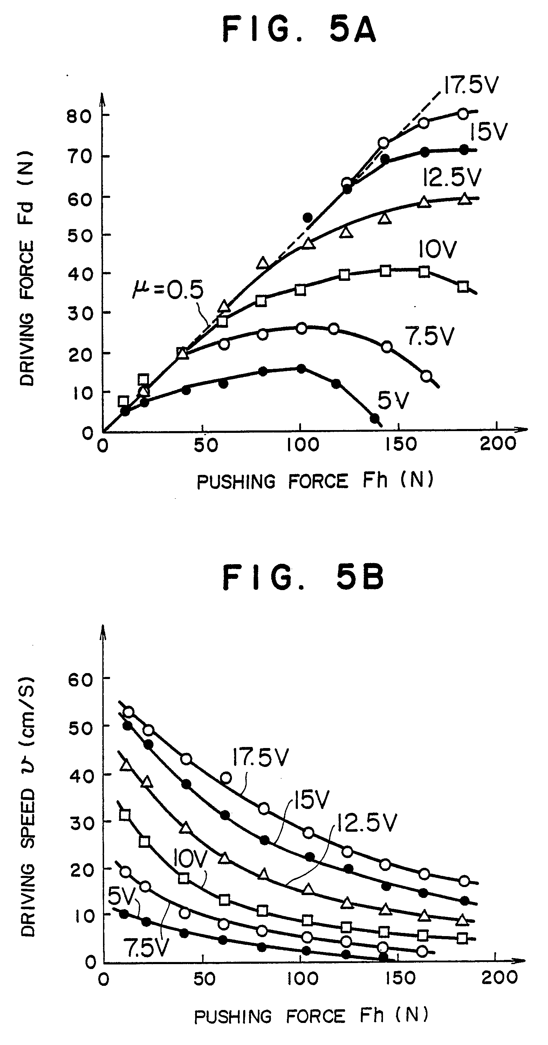

Next, the operation of this embodiment will be explained. In Fig. 6A, the x/y coordinates are defined such that the x axis is the driving direction and the y axis is the direction perpendicular to the driving direction, i.e., the direction normal to the face of driven member. By presetting the displacement of the parallel flat springs 20a, 20b, 21a and 21b which support the piezo-electric drive units 1a and 1b, it is possible to set a proper pushing force (e.g., the pushing force Fh for providing an intended driving force and driving speed based on the characteristic diagrams of Figs. 5A and 5B). A synchronized high-frequency voltage and d.c. voltage, as shown in Fig. 3, are applied to the piezo-electric elements of both drive units 1a and 1b, so that the units produce driving forces in the same direction, and the driven member 4 is driven in the same direction. The driving force can be adjusted through the adjustment of the d.c. voltage. Since the parallel flat springs 20a, 20b, 21a and 21b which support the piezo-electric drive units 1a and 1b are extremely rigid in the driving direction (x direction), they can transmit the driving force in high fidelity to the driven member 4.

The driven member 4 is connected at its both ends to the table 170 by parallel flat springs 19a and 19b, and even if its center position has an error due to insufficient assembling accuracy or guiding accuracy, the flexibility of the driven member 4 in the y direction alleviates its influence on the pushing force of the drive unit, and a normal pushing force can be maintained.

The parallel flat springs 20a, 20b, 21a and 21b for supporting the piezo-electric drive units 1a and 1b are given a sufficient initial displacement, and therefore the initial pushing force can virtually be retained even after the drive end 8 has some wear. A known hinge mechanism may be employed for supporting the piezo-electric units, in place of the flat springs.

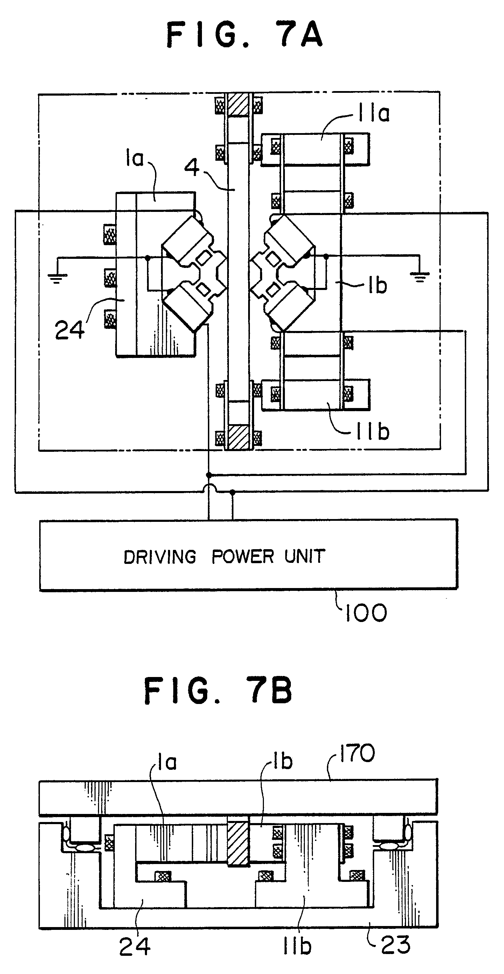

Next, a different embodiment of the invention will be described with reference to Figs. 7A and 7B, that are a plan view and front view of the embodiment. In the figures, components identical to those in Figs. 6A and 6B are referred to by the common symbols. The embodiment shown in Figs. 7A and 7B are characterized in that one piezo-electric drive unit, e.g., 1a is securely fixed to a fixing member 24 and another piezo-electric drive unit 1b is supported by flat springs as in the embodiment of Fig. 6A so that a pushing force is applied. The driven member 4 has its both ends supported on the table 170 by means of flat springs as in the embodiment of Fig. 6A.

The pushing force is stabilized also in this embodiment, and in addition the complete fixation of one piezo-electric drive unit at its mount section enhances the regidity in the driving direction, resulting in the drive force transmission with increased fidelity. The pushing force can of course be varied arbitrarily by adjusting the d.c. voltage. In case the whole assembly on table 170 and its guiding mechanism are in sufficient accuracy, the driven member 4 may be fitted directly to the table 170, with the parallel flat springs on both ends thereof being omitted, and a variation in the pushing force little affects the stable driving performance.

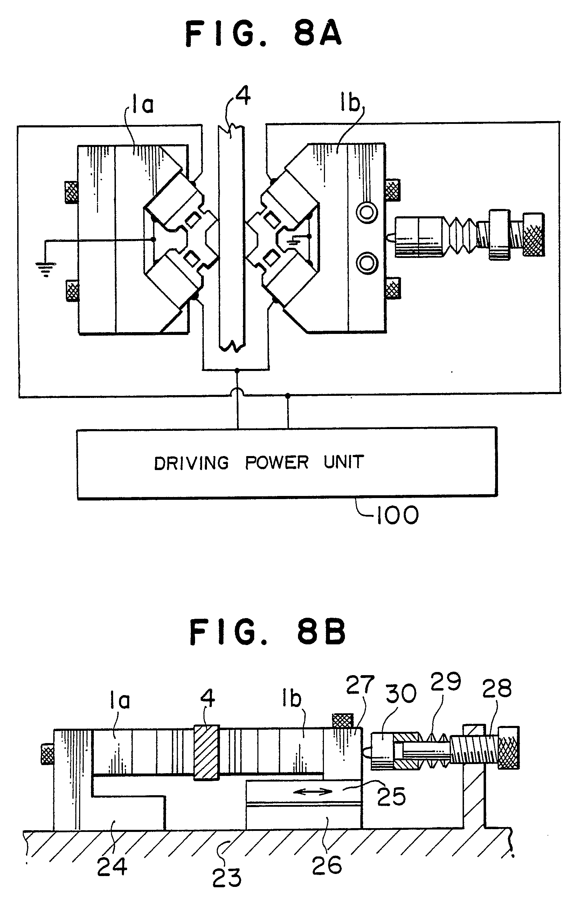

Next, a different embodiment of this invention will be described with reference to Figs. 8A and 8B, that are a plan view and front view of the embodiment. Only principal portions are shown in the figures, and portions identical to those in Figs. 7A and 7B are given the common symbols. In the embodiment shown in Figs. 7A and 7B, the piezo-electric drive units are supported by a linear motion bearing 26 which is slidable along the direction (indicated by the arrow 25) normal to the face of driven member 4, in place of the parallel flat springs used in the preceding embodiments. One piezo-electric drive unit 1b is fitted on the bearing 26 through a block 27, and the pushing force is applied to the back of the block 27 by means of a screw 28 and belleville spring (or coil spring) 29. A load cell 30 may be provided to adjust the pushing force accurately.

This embodiment not only realizes a supporting mechanism with high regidity in the driving direction, but it also allows accurate and easy adjustment for the pushing force.

Although the foregoing embodiments are intended for the linear drive of driven members, the present invention is of course applicable to structures in which driven members are supported on rotary bearings, as shown the following embodiments.

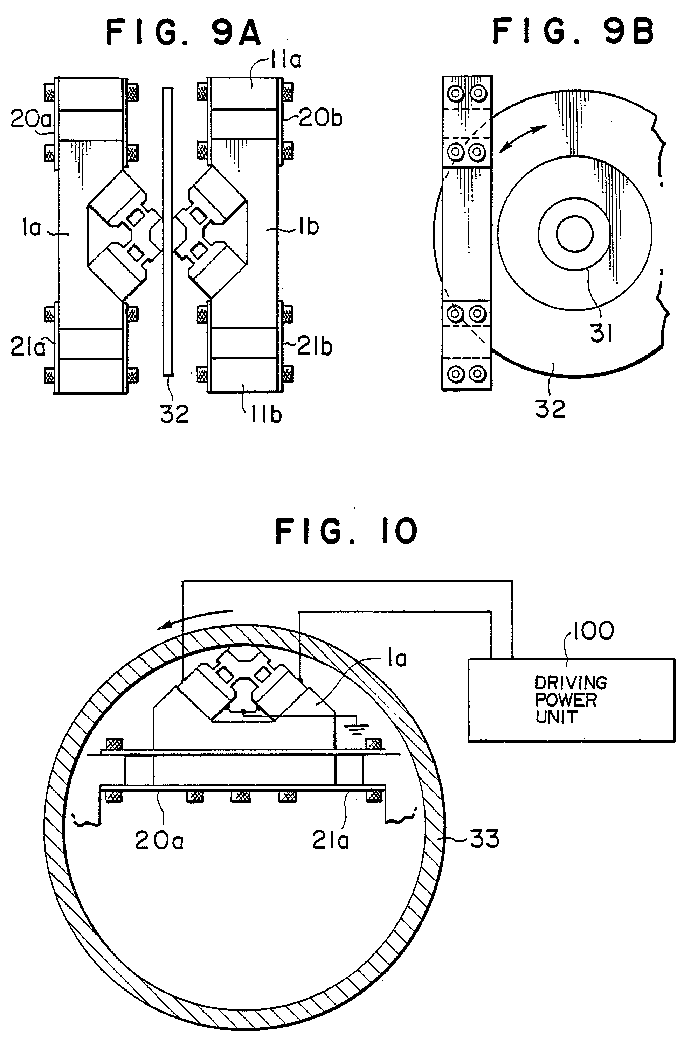

Figs. 9A and 9B are a front view and side view of a different embodiment of this invention. The drive units and related portions are identical to those of Fig. 1 and are not shown in detail here. In the embodiment, a discsshape driven member 32 is supported rotatably on a bearing 31, and it is cramped on its both sides by piezo-electric drive units 1a and 1b, with the pressing force being applied by means of flat springs 20a, 20b, 21a and 21b.

Fig. 10 shows other embodiment of this invention, in which a cylindrical rotor 33 supported rotatably by a bearing (not shown) is driven at its interior surface by a piezo-electric drive unit 1a. Also in this embodiment, parallel flat springs 20a and 21a produce a stable pushing force.

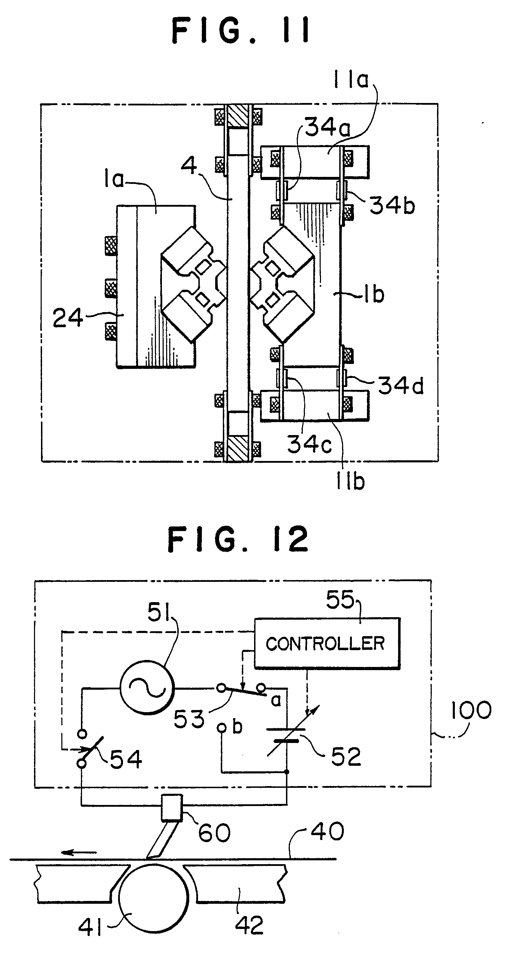

Fig. 11 is a plan view showing a different embodiment of this invention, in which the parallel flat spring support in the embodiment of Figs. 7A and 7B is replaced by supporting means 34a-34d capable of electrical adjustment for the pushing force. In the figure, indicated by 34a, 34b, 34c and 34d are flat springs, with thin piezo-electric elements being fitted on their surface. The piezo-electric drive unit 1b bases its electrical adjustment of pushing force on the principle of "bimorph" or "unimorph" piezo-electric element which is bent by application of a voltage. Theis embodiment enables the piezo-electric drive unit to control the pushing force depending on the load condition and operational condition of the piezo-electric motor so that it operates more efficiently.

In the foregoing embodiments with the disposition of confronting piezo-electric drive units, one piezo-electric drive unit may be replaced with a means of smoothly guiding the driven member, e.g., a roller guide bearing or slide guide bearing, so that the driven member is driven solely by the single drive unit.

Fig. 12 shows a further embodiment of this invention. In the figure, indicated by 51 is an a.c. power source, 52 is a d.c. power source, 53 and 54 are switches, 55 is a controller for controlling the operation of the switches and the voltage, 60 is a piezo-electric drive unit in a slant disposition, 40 is a sheet member which is a type of transported member, 41 is a motion assisting roller, and 42 is a guide means. When the switch 53 is set to the a-position, the a.c. voltage superimposed on the d.c. voltage, as shown in Fig. 3, is applied to the unit 60. Consequently, the unit 60 and roller 41 in unison move the sheet member 40. The pushing force between the unit 60 and sheet member 40 varies in response to the variation of the d.c. voltage. When the d.c. voltage is not applied, the switch 53 is set to the b-position.

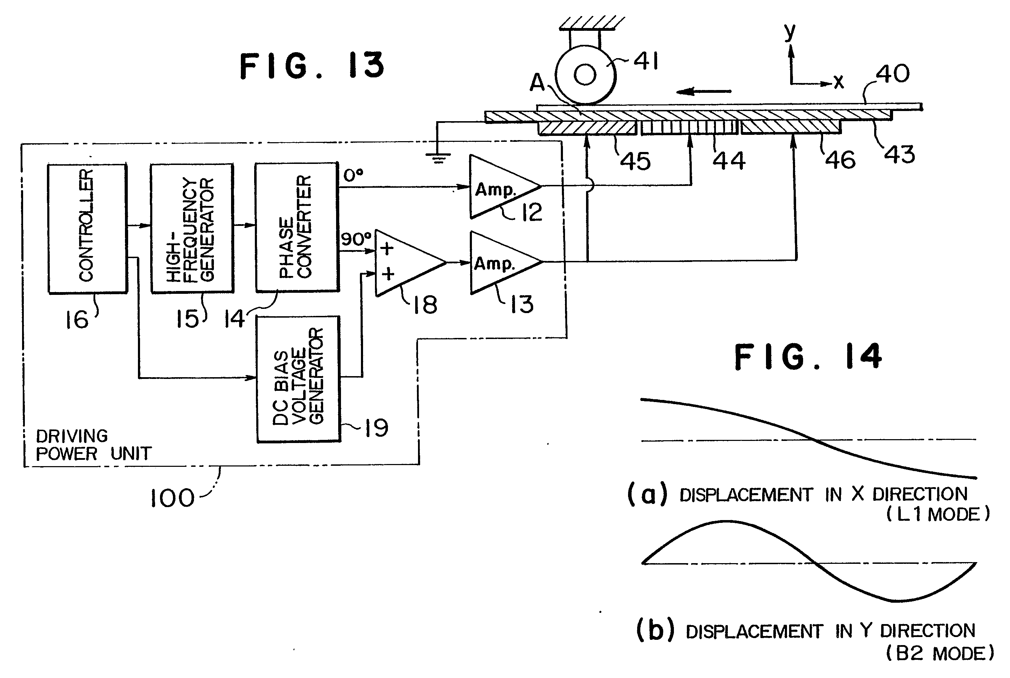

Fig. 13 shows a further different embodiment of this invention, in which indicated by 40 is a driven member (e.g., sheet), 41 is a movement assisting roller, 43 is a vibration plate, and 44, 45 and 46 are piezo-electric plates bonded to the vibration plate 43. The components 43-46 in combination constitute a piezo- electric drive unit. By the expansion and contraction of the piezo-electric plate 44 in the planar direction, the vibration plate 43 generates a vibration in the planar direction (x direction) called L1 mode as shown by (a) in Fig. 14, and at the same time by the expansion and contraction of the piezo-electric plates 45 and 46, it generates a bending vibration in the perpendicular direction (y direction) called B2 mode as shown by (b) in Fig. 14. These vibration components with a 90° phase difference create a vibration with a ellipsoidal locus at point A, and the driven member 40 cramped between the plate 43 and roller 41 is transported. The piezo-electric plates 45 and 46 are disposed to have opposite polarizing directions so that they expand or contract in response to the common voltage application.

By application of a d.c. bias voltage provided by the driving power unit 100 to the piezo-electric plates 45 and 46, thereby causing the vibration plate 43 to have a constant bend, the pushing force against the roller 41 can be adjusted.

According to this invention, as described above, the pushing force acting between the piezo-electric drive unit and the driven member can be adjusted arbitrarily. Specifically, the pushing force can be adjusted arbitrarily through the application of an adjustable d.c. voltage to the piezo-electric drive unit.

## Claims

1. An actuator for driving a driven member (4), comprising:

a piezo-electric drive unit (1) applied with an a.c. voltage so as to drive the driven member (4) disposed in contact with said drive unit (1); and

means for applying and adjusting a pushing force acting between said drive unit (1) and said driven member (4).

2. An actuator according to Claim 1, wherein said pushing force applying and adjusting means comprises a driving power unit (100) which applies a d.c. voltage to said piezo-electric drive unit (1).

3. An actuator according to Claim 1, wherein said piezo-electric drive unit (1) and said driven member (4) are disposed in contact with each other, with the pushing force between thereof being virtually nullified when the application voltage is zero.

4. An actuator according to Claim 1, wherein piezo-electric drive units (1a, 1b) are disposed to confront each other on both sides of said driven member (4).

5. An actuator according to Claim 2, wherein said driving power unit (100) supplies the d.c. voltage superimposed on said a.c. voltage to said piezo-electric drive unit (1).

6. An actuator according to Claim 1, wherein said applying and adjusting means further includes supporting means which is high in rigidity in the driving direction of said driven member (4) and low in rigidity in the direction normal to the drive face, and said piezo-electric drive unit (1) is supported by said supporting means.

7. An actuator according to Claim 6, wherein said drive unit (1) supporting means comprises parallel flat springs (20, 21) which are generally in parallel to the driving direction of said driven member (4), said flat springs (20, 21) providing said driven member (4) with a pushing force created by displacements of said springs (20, 21).

8. An actuator according to Claim 1, wherein said driven member (4) is linked to a load (170) by parallel flat springs (19a, 19b) which are rigid in the driving direction and flexible in the direction normal to the drive face.

9. An actuator according to Claim 4, wherein one of said piezo-electric drive units (1a, 1b) disposed to confront each other by being interposed by said driven member (4) is fixed, and another drive unit provides the pushing force.

10. An actuator according to Claim 1, wherein said applying and adjusting means further includes supporting means which is provided with a linear motion bearing (26) and a spring support (28, 29) for providing the pushing force to said driven member (4), and said piezo-electric drive unit (1) is supported by said supporting means.

11. An actuator according to Claim 1, wherein said applying and adjusting means further includes supporting means which comprises means for adjusting the pushing force in an electrical manner, and said piezo-electric drive unit (1) is supported by said supporting means.

12. An actuator according to Claim 1, wherein said applying and adjusting means further includes supporting means which comprises parallel flat springs (20, 21) that are bent by piezo-electric elements (2, 3), and said piezo-electric drive unit (1) is supported by said supporting means.

13. An actuator in which a cyclic locus of vibration is created at the tip of a piezo-electric drive unit (1) that is a combination of laminated piezo-electric elements (2, 3) so that a driven member (4) in contact with said tip is driven, said actuator comprising: means for applying a d.c. bias voltage to said piezo-electric elements (2, 3); and means for varying said d.c. bias voltage so that a pushing force acting between said drive unit (1) and said driven member (4) is adjusted.

14. An actuator according to Claim 13, wherein said piezo-electric drive unit (1) and said driven member (4) are disposed in contact with each other, so that the pushing force between thereof is virtually nullified when the application voltage is zero.

15. An actuator according to Claim 13, wherein piezo-electric drive units (1a, 1b) are disposed to confront each other on both sides of said driven member (4).

16. An actuator in which a cyclic locus of vibration is created at the tip of piezo-electric drive units (1a, 1b) that incorporate piezo-electric elements (2, 3) so that a driven member (4) in contact with said tip is driven, wherein at least one (1b) of said drive units (1a, 1b) is supported by supporting means which is high in rigidity in the driving direction of said driven member (4) and low in rigidity in the direction normal to the drive face, and wherein said actuator comprises an a.c. power unit (15) for generating an a.c. voltage which causes said piezo-electric elements (2, 3) to create a cyclic locus of vibration, and a d.c. power unit (19) for generating a d.c. voltage which causes said piezo-electric elements (2, 3) to create a pushing force between said drive units (1a, 1b) and said driven member (4).

17. An actuator according to Claim 16, wherein said drive unit (1) supporting means comprises parallel flat springs (20, 21) which are generally in parallel to the driving direction of said driven member (4), said flat springs (20, 21) providing said driven member (4) with a pushing force created by displacements of said springs (20, 21).

18. An actuator according to Claim 16, wherein said driven member (4) is linked to a load (170) by parallel flat springs (19a, 19b) which are rigid in the driving direction and flexible in the direction normal to the drive face.

19. An actuator comprising a piezo-electric drive unit (1) disposed in contact with a driven member (4); means (11) for supporting said drive unit (1); and a driving power unit (100) which supplies said drive unit (1) with a driving a.c. voltage and a d.c. voltage superimposed on said a.c. voltage for adjusting a pushing force between said drive unit (1) and said driven member (4).

20. An actuator according to Claim 19, wherein said driving power unit (100) comprises a controller (16) which adjusts at least one of said d.c. voltage and a.c. voltage.

21. An actuator according to Claim 19, wherein said drive unit (1) supporting means comprises a linear motion bearing (26) and a spring support (28, 29) for providing the pushing force.

22. An actuator according to Claim 19, wherein said drive unit (1) supporting means comprises means for adjusting the pushing force in an electrical manner.

23. An actuator according to Claim 19, wherein said drive unit (1) supporting means comprises parallel flat springs (20, 21) which are bent by piezo-electric elements (2, 3).

24. An actuator in which a cyclic locus of vibration is created at the tip of piezo-electric drive units (1a, 1b) that incorporate piezo-electric elements (2, 3) so that a driven member (4) in contact with said tip is driven, said actuator comprising supporting means which is high in rigidity in the driving direction of said driven member (4) and low in rigidity in the direction normal to the drive face, said supporting means supporting at least one (1b) of said drive units (1a, 1b).

25. An actuator according to Claim 24, wherein said drive unit (1) supporting means comprises parallel flat springs (20, 21) which are generally in parallel to the driving direction of said driven member (4), said flat springs (20, 21) providing said driven member (4) with a pushing force created by displacements of said springs (20, 21).

26. An actuator according to Claim 24, wherein said driven member (4) is linked to a load (170) by parallel flat springs (19a, 19b) which are rigid in the driving direction and flexible in the direction normal to the drive face.

# FIG. I

DRIVING
POWER UNIT

# FIG. 2

# FIG. 3

# FIG. 4A

DRIVING POWER UNIT : A  100a

DRIVING POWER UNIT : B  100b

6a  6b  1b  11

2a  2b

3a  3b

5a  1a  4  5b

# FIG. 4B

1a  4  1b  11

EP 0 297 574 A2

# FIG. 5A

# FIG. 5B

# FIG. 6A

DRIVING POWER UNIT — 100

# FIG. 6B

# FIG. 7A

DRIVING POWER UNIT

# FIG. 7B

# FIG. 8A

DRIVING  POWER  UNIT

100

# FIG. 8B

# FIG. 9A

# FIG. 9B

# FIG. 10

DRIVING
POWER
UNIT

# FIG. 11

# FIG. 12

# FIG. 13

CONTROLLER 16
HIGH-FREQUENCY GENERATOR 15
PHASE CONVERTER 14
DC BIAS VOLTAGE GENERATOR 19
18
Amp. 12
Amp. 13

DRIVING POWER UNIT

100

0°
90°

A
41
45  44  46  43
40
y
x

EP 0 297 574 A2

# FIG. 14

(a) DISPLACEMENT IN X DIRECTION (L1 MODE)

(b) DISPLACEMENT IN Y DIRECTION (B2 MODE)